Europäisches Patentamt

**European Patent Office**

Office européen des brevets

(19)

(11) Numéro de publication: **0 252 805 B1**

(12) # FASCICULE DE BREVET EUROPEEN

(45) Date de publication du fascicule du brevet:
**18.07.90**

(51) Int. Cl.⁵: **B60G 21/04**, B60G 7/02, B60G 3/26, F16F 1/12

(21) Numéro de dépôt: **87401512.6**

(22) Date de dépôt: **30.06.87**

(54) **Train arrière pour véhicule automobile à action passive et véhicule automobile équipé d'un tel train.**

(30) Priorité: **10.07.86 FR 8610102**

(43) Date de publication de la demande:
**13.01.88 Bulletin 88/2**

(45) Mention de la délivrance du brevet:
**18.07.90 Bulletin 90/29**

(84) Etats contractants désignés:
**DE GB IT**

(56) Documents cités:
**DE-A- 2 437 266
DE-A- 3 524 763
FR-A- 2 079 967
FR-A- 2 492 918
FR-A- 2 564 785**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Galtier, Lucien Emilien Léon, 28, rue de Favigny, F-91390 Morsang s/Orge(FR)**
Inventeur: **Barthelemy, André Jean, 52, route de Limours, F-78470 St. Remy-les-Chevreuse(FR)**

(74) Mandataire: **Durand, Yves Armand Louis et al, Cabinet Z. Weinstein 20, Avenue de Friedland, F-75008 Paris(FR)**

ACTORUM AG

## Description

La présente invention concerne un train arrière à action passive pour véhicule automobile, et du type à bras tirés ou à triangles oscillants obliques tirés.

Elle vise également un véhicule automobile équipé d'un tel train arrière.

Les trains arrière du type défini ci-dessus font l'objet d'un calage statique pour assurer le parallélisme des roues avec l'axe du train qui est également l'axe du véhicule.

On sait que lorsqu'un tel train est soumis à des sollicitations transversales en virage, la roue arrière extérieure a tendance à prendre un angle d'ouverture par rapport à l'axe du véhicule.

Ce phénomène résulte en générale de l'ensemble des déformations du train arrière et de ses attaches au véhicule, ce qui se traduit par un effet "survireur", indésirable en sortie du virage.

La présente invention propose un agencement de train arrière tel qu'au-delà d'un seuil d'effort latéral appliqué sur une roue arrière extérieure du véhicule, celle-ci prenne un angle de pincement vers l'axe du véhicule entraînant un effet "sous-vireur".

Pour cela, le train arrière pour véhicule automobile du type comprenant deux supports de roues par exemple à bras tirés ou à triangles oscillants obliques tirés ; un cadre sur lequel s'articulent les supports de roues autour d'un axe de pivotement et sur lequel repose la caisse du véhicule par l'intermédiaire de deux liaisons élastiques à rigidité latérale élevée, situées en arrière de l'axe des roues et deux liaisons élastiques à souplesse latérale élevée, situées en avant de l'axe de pivotement des supports de roue, est caractérisé en ce qu'il comprend un dispositif mécanique relié entre le cadre et la caisse du véhicule et comprenant un élément élastique permettant un pivotement du cadre par rapport à la caisse du véhicule autour d'un point d'articulation situé en arrière de l'axe des roues lorsqu'un effort latéral appliqué à l'une des roues dépasse une valeur de seuil prédéterminée définie par l'élément élastique.

Le seuil d'effort latéral qui engendre l'angle de pincement de la roue arrière extérieure vers l'axe du véhicule est défini de manière à interdire le flottement de la roue en ligne droite.

Selon une autre caractéristique de l'invention, le dispositif mécanique précité comprend un cylindre solidaire du cadre ; un organe formant tirant traversant coaxialement le cylindre et relié par ses extrémités libres à la caisse du véhicule ; deux entretoises maintenues axialement séparées l'une de l'autre dans le cylindre par l'élément élastique, de préférence constitué par un ressort précontraint, interposé entre les deux entretoises, l'une ou l'autre de ces entretoises pouvant se déplacer axialement respectivement dans un sens ou dans l'autre par rapport à l'organe formant tirant et à l'encontre de la force de rappel de l'élément élastique lorsque l'effort latéral précité dépasse la valeur de seuil précitée.

Selon encore une autre caractéristique de l'invention, le cylindre précité comprend deux rebords internes situés de part et d'autre de celui-ci et sur lesquels viennent respectivement en appui forcé, par l'action de l'élément élastique précité, deux épaulements respectivement des deux entretoises précitées lesquelles se prolongent en dehors de chacune des extrémités du cylindre pour s'appuyer à chacune de leurs extrémités libres sur une butée solidaire de l'organe formant tirant.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :

- figures 1 et 2 représentent des vues schématiques de dessus d'un train arrière de véhicule automobile conforme aux principes de l'invention ;
- la figure 3 est une vue en coupe partielle détaillée du système mécanique du train arrière de l'invention suivant un premier mode de réalisation ; et
- la figure 4 est une vue en élévation suivant la flèche IV de la figure 1, avec coupe, du système mécanique du train arrière de l'invention suivant le deuxième mode de réalisation.

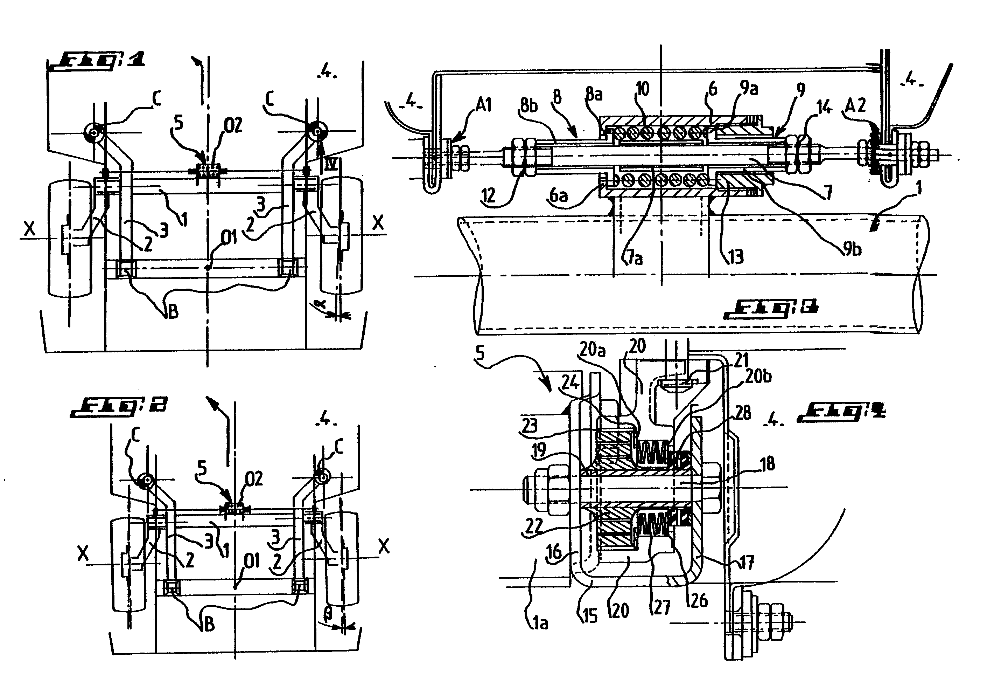

En se reportant aux figures 1 à 3, le train arrière pour véhicule automobile comprend, comme cela est déjà connu en soi, une traverse principale 1 située à l'avant de l'axe de roues X-X sur laquelle s'articulent les deux supports de roue 2, dans le cas présent constitués par des bras tirés, et portant chacun la fusée de roue, le moyeu de roue, le dispositif de freinage, la roue etc... (non représentés en détail).

La traverse 1 est reliée rigidement à deux longerons 3, un longeron gauche et un longeron droit, sur lesquels repose la caisse 4 du véhicule par l'intermédiaire de quatre liaisons élastiques supportant la charge verticale arrière du véhicule, réparties deux à l'avant et deux à l'arrière de l'axe de roue arrière X-X.

Les liaisons arrière B doivent être situées le plus en arrière possible par rapport à l'axe de roue X-X afin d'augmenter l'efficacité d'action suivant l'axe des roues des forces dues aux accélérations latérales en virage.

La rigidité latérale de ces liaisons élastiques B doit être élevée et définie afin d'assurer un centre ou point théorique 01 d'articulation du train situé à l'arrière de l'axe des roues X-X.

Les liaisons avant C, latéralement très souples, permettent au train la possibilité de s'articuler autour du centre théorique 01, de part et d'autre d'un calage statique de parallélisme à zéro, dans un plan horizontal contenant le centre théorique 01 et les liaisons avant C.

La traverse 1 et les deux longerons 3 définissent un cadre susceptible d'être élastiquement lié à la caisse 4 du véhicule par l'intermédiaire d'un système mécanique 5 permettant un pivotement du train sous l'effet des sollicitations latérales comme il sera expliqué plus en détail ultérieurement.

Le système mécanique 5 comprend, comme représenté en détail en figure 3, un cylindre 6 solidaire de la traverse 1 du train.

Un organe formant tirant 7 traversant coaxialement le cylindre 6 est relié semi-rigidement à ses extrémités libres à la caisse 4 du véhicule par l'intermédiaire de deux assemblages A1 et A2 écrous-contre-écrous-rondelles-garnitures en caoutchouc. Le système mécanique 5 comprend de plus deux entretoises 8 et 9 maintenues axialement séparées l'une de l'autre dans le cylindre 6 par un élément élastique 10, constitué dans le cas présent par un ressort logé dans le cylindre et interposé entre les deux entretoises. L'entretoise 8 comprend un épaulement 8a à l'intérieur du cylindre 6 et venant en appui forcé, sous l'action du ressort précontraint 10, sur un rebord interne 6a du cylindre situé à son extrémité gauche par rapport à la figure 3. L'entretoise 8 se prolonge en dehors du cylindre 6 par sa partie cylindrique 8b traversant l'ouverture circulaire définie par le rebord interne 6a, l'extrémité libre de la partie 8b de l'entretoise 8 étant en appui sur une butée 12 formée par un écrou et contre-écrou vissé sur une partie fixe correspondante de l'organe formant tirant 7. De même, l'entretoise 9 comprend un épaulement 9a à l'intérieur du cylindre 6 venant en appui forcé, sous l'action du ressort précontraint 10, sur une partie formant rebord 13 constituée par un écrou intérieur réglable vissé dans le cylindre 6. La partie cylindrique 9b de l'entretoise 9 se prolonge en dehors du cylindre 6 à son extrémité droite par rapport à la figure 3 à travers un orifice ménagé dans l'écrou fileté extérieurement 13, l'extrémité libre de la partie 9b étant en appui sur une autre butée 14 égalemet constituée par un écrou et un contre-écrou vissé sur une partie fixe correspondante de l'organe formant tirant 7. Ce dernier est parallèle à la traverse 1 tandis que le cylindre 6 est solidaire, par exemple par soudage, de la traverse 1. L'écrou intérieur 13 permet de régler la distance au repos entre les épaulements 8a et 9a des deux entretoises.

L'organe formant tirant 7 comporte une entretoise 7a concentriquement solidaire de celui-ci et disposée à l'intérieur du ressort précontraint 10. L'entretoise 7a a une longueur inférieure à la distance séparant les deux épaulements des entretoises 8 et 9 afin de limiter l'écrasement du ressort 10 lorsqu'une accélération latérale est appliquée au véhicule à la manière qui sera décrite ci-dessous.

Lorsque le véhicule se déplace dans un virage par exemple à gauche comme représenté aux figures 1 et 2 et que le train arrière est soumis à des sollicitations transversales en virage correspondant à des accélérations latérales en virage d'une valeur inférieure à une valeur prédéterminée, par exemple de 0,2 g, la roue arrière extérieure a tendance à prendre l'angle d'ouverture par rapport à l'axe longitudinal du véhicule. Comme expliqué précédemment, ce phénomène résulte de l'ensemble des déformations du train arrière et de ses attaches à la caisse du véhicule, ces déformations amenant l'ensemble essieu à s'articuler autour d'un centre d'articulation 02 par rapport à la caisse du véhicule, le centre 02 étant situé dans l'axe du véhicule et sensiblement au centre du cylindre 6. Dans cette situation, le ressort précontraint 10 tend à maintenir les parties fixes A1, A2, 7, 12, 14 et mobiles 1, 6 dans une position relative moyenne, correspondant au parallélisme zéro en statique.

Lorsque l'accélération latérale en virage dépasse la valeur de seuil précitée, le train arrière pivote alors autour du centre théorique 01 pour obtenir un angle pré-défini de braquage du train, qui se traduit par un angle de pince β sur la roue arrière extérieure au virage et un angle d'ouverture correspondant sur la roue intérieure au virage. En d'autres termes, le cadre défini par la traverse 1 et les longerons 3 pivote par rapport à la caisse du véhicule autour du centre d'articulation 01 par l'intermédiaire du système mécanique élastique 5. Plus précisément, la traverse 1 et le cylindre 6 solidaire de celle-ci déplace axialement l'une ou l'autre des entretoises 8 ou 9 respectivement dans un sens ou dans l'autre par rapport à l'organe formant tirant 7 et ce à l'encontre de la force de rappel du ressort précontraint 10, selon le type de virage abordé. Dans le cas présent, le virage sur lequel se déplace le véhicule étant à gauche, c'est l'entretoise 9 qui se déplace axialement par rapport au tirant 7 vers la gauche par rapport à la figure 3. Le seuil d'accélération latérale en virage et la valeur de l'angle de pincement sont obtenus par le tarage en position moyenne du ressort de compression 10. De plus, le déplacement axial de l'une ou l'autre des entretoises 8 et 9 est limité par l'entretoise 7a qui limite donc l'écrasement du ressort précontraint 10.

La distance au repos ou position relative moyenne précitée est réglée en ajustant la position relative de l'écrou intérieur 13 par rapport au cylindre 6.

En se référant à la figure 4, le dispositif mécanique 5 suivant le deuxième mode de réalisation est incorporé dans chacune des liaisons élastiques avant C du train arrière. Deux dispositifs analogues 5 sont ainsi montés symétriquement sur les liaisons élastiques C. Un seul de ces deux dispositifs sera décrit ci-dessous.

Chaque dispositif mécanique 5 comprend une pièce en U 15 liée à un élément 1a de la traverse et dont les faces opposées 16 et 17 sont renforcées et maintenues parallèles par un boulon 18 portant un fourreau 19. Cet ensemble est relié à la caisse 4 par l'intermédiaire d'un support 20 fixé par deux boulons 21, un seul étant représenté. Entre le support 20 et le fourreau 19 sont interposées des bagues en élastomère 22 entourées par une bague métallique 23 servant de butée à une rondelle 24 en appui sur un épaulement 20a du support 20.

Le support 20 comporte un deuxième épaulement 20b opposé à l'épaulement 20a et servant de butée à une rondelle 26. Des rondelles ressorts 27 sont précontraintes entre les rondelles 24 et 26. Des bagues en élastomère dur 28 sont intercalées entre la face 17 solidaire de la traverse et la rondelle 26. Ces bagues servent à absorber la tolérance inévitable entre l'épaulement 20b et la face 17 de la pièce en U 15.

Lorsque le véhicule se déplace dans un virage et tant que la précontrainte de chaque ressort des deux dispositifs mécaniques 5 n'est pas atteinte, le cadre 1, 3 s'articule autour du centre d'articulation 02 déformant les bagues élastiques 22.

Lorsque l'accélération latérale en virage dépasse la valeur de seuil définie par la précontrainte du ressort 27 et que le véhicule se déplace dans un virage à gauche, le cadre 1, 3 et donc les longerons 3 pivotent par rapport à la caisse du véhicule autour du centre d'articulation 01 vers la gauche. Dans ce cas, la rondelle 26 du dispositif mécanique de la figure 4 écrase les rondelles ressorts 27 contre la rondelle 24 en butée sur la bague 23 maintenue par contrainte solidaire du support 20 tandis que les rondelles élastomère 28 de l'autre dispositif mécanique 5, dans le cas présent incorporé à la liaison élastique avant C à gauche par rapport à la figure 1, s'écartent de la rondelle 26.

Lorsque le véhicule se déplace dans un virage à droite, les longerons se déplacent vers la droite en écartant les rondelles élastomère 28 de la rondelle 25 du dispositif mécanique 5 de la figure 4 et en écrasant les rondelles ressorts 27 contre la rondelle 24 du dispositif mécanique 5 de l'autre liaison C de l'essieu.

On comprend donc que les deux dispositifs mécaniques 5 incorporés respectivement dans les deux liaisons élastiques C fonctionnent en concomitance pour entraîner l'effet "sous-vireur" mentionné précédemment au-delà d'un seuil d'effort latéral appliqué sur une roue arrière extérieure du véhicule.

**Revendications**

1. Train arrière pour véhicule automobile du type comprenant deux supports de roues, par exemple à bras tirés ou à triangles oscillants tirés, un cadre sur lequel s'articulent les supports de roues autour d'un axe de pivotement et sur lequel repose la caisse du véhicule par l'intermédiaire de deux liaisons élastiques à rigidité latérale élevée, et situées en arrière de l'axe des roues et de deux liaisons élastiques à souplesse latérale élevée, situées en avant de l'axe de pivotement des supports de roues, caractérisé en ce qu'il comprend un dispositif mécanique (5) relié entre le cadre (1, 3) et la caisse (4) du véhicule et comprenant un élément élastique (10) permettant le pivotement du cadre par rapport à la caisse (4) du véhicule autour d'un point d'articulation (01) situé en arrière de l'axe des roues lorsqu'un effort latéral appliqué à l'une des roues dépasse une valeur de seuil prédéterminée définie par l'élément élastique (10).

2. Train arrière selon la revendication 1, caractérisé en ce que le dispositif mécanique (5) précité comprend un cylindre (6) solidaire du cadre précité, un organe formant tirant (7) traversant coaxialement le cylindre (6) et relié par ses extrémités libres à la caisse (4) du véhicule, deux entretoises (8, 9) maintenues axialement séparées l'une de l'autre dans le cylindre (6) par l'élément élastique (10) précité, de préférence constitué par un ressort précontraint, interposé entre les deux entretoises (8, 9), l'une ou l'autre de ces entretoises pouvant se déplacer axialement respectivement dans un sens ou dans l'autre par rapport à l'organe formant tirant (7) et à l'encontre de la force de rappel de l'élément élastique (10) lorsque l'effort latéral précité dépasse la valeur de seuil précitée.

3. Train arrière selon la revendication 1 ou 2, caractérisé en ce que le cylindre (6) précité comprend deux rebords internes (6a, 13) situés de part et d'autre de celui-ci et sur lesquels viennent respectivement en appui forcé, par l'action de l'élément élastique (10) précité, deux épaulements (8a, 9a) des deux entretoises (8, 9) précitées, lesquelles se prolongent en dehors de chacune des extrémités du cylindre (6) pour s'appuyer à chacune de leurs extrémités libres sur une butée (12, 14) solidaire de l'organe formant tirant (7).

4. Train arrière selon l'une des revendications précédentes, dont le cadre se compose d'une traverse (1) et de deux longerons (3), les supports de roues (2) étant articulés sur la traverse (1), caractérisé en ce que l'organe formant tirant (7) est parallèle à la traverse (1) et en ce que le cylindre (6) précité est solidaire de la traverse (1).

5. Train arrière selon l'une des revendications précédentes, caractérisé en ce que l'un (13) des rebords internes précités du cylindre (6) est défini par un écrou intérieur réglable (13) par rapport au cylindre (6) et permettant de régler la distance au repos entre les épaulements (8a, 9a) des deux entretoises.

6. Train arrière selon l'une des revendications précédentes, caractérisé en ce que l'organe formant tirant (7) précité comprend une entretoise (7a) concentriquement solidaire de celui-ci, disposée à l'intérieur de l'élément élastique (10) et ayant une longueur inférieure à la distance entre les deux épaulements (8a, 9a) des deux entretoises pour limiter l'écrasement de l'élément élastique (10).

7. Train arrière selon la revendication 1, caractérisé en ce que le dispositif mécanique (5) précité est incorporé dans chacune des deux liaisons élastiques avant (C).

8. Véhicule automobile équipé d'un train selon l'une des revendications 1 à 7.

**Claims**

1. Rear axle for automotive vehicle of the type comprising two wheel supports, for instance with drawn arms or with drawn oscillating triangles, a frame onto which the wheel supports are articulated about a pivot axis and onto which rests the body of the vehicle through the medium of two elastic connections with high lateral rigidity and located backwards of the axis of the wheels and of two elastic connections with high lateral flexibility located forward of the pivot axis of the wheel supports, characterized in that it comprises a mechanical device (5) connected between the frame (1, 3) and the body (4) of the vehicle and comprising an elastic element (10) permitting the pivoting of the frame with respect to the body (4) of the vehicle around an articulation point (01) located backwards of the axis of the wheels when a lateral effort applied to one of the wheels exceeds a predetermined threshold value defined by the elastic element (10).

2. Rear axle according to claim 1, characterized in that the aforesaid mechanical device (5) comprises a cylinder (6) fast with the aforesaid frame, a brace-forming member (7) extending coaxially through the cylinder (6) and connected by its free ends to the body (4) of the vehicle, two spacers (8, 9) maintained axially separated from each other in the cylinder (6) by the aforesaid elastic element (10), preferably constituted by a prestressed spring interposed between both spacers (8, 9), either one of these spacers being axially displaceable in one direction or in the other one, respectively, with respect to the brace forming member (7) and against the return force of the elastic element (10) when the aforesaid lateral effort exceeds the aforesaid threshold value.

3. Rear axle according to claim 1 or 2, characterized in that the aforesaid cylinder (6) comprises two inner flanges (6a, 13) located on either side thereof and with which are respectively in forced bearing engagement through the action of the aforesaid elastic element (10) two shoulders (8a, 9a) of both aforesaid spacers (8, 9) which extend outside of each one of the ends of the cylinder (6) for bearing at each one of their free ends onto an abutment (12, 14) fast with the brace forming member (7).

4. Rear axle according to one of the preceding claims the frame of which consists of a cross bar (1) and of two longitudinal members (3), the wheel supports (2) being pivotally connected onto the cross bar (1), characterized in that the brace forming member (7) is parallel to the cross bar (1) and in that the aforesaid cylinder (6) is fast with the cross bar (1).

5. Rear axle according to one of the preceding claims, characterized in that one (13) of the aforesaid inner flanges of the cylinder (6) is defined by an inner nut (13) adjustable with respect to the cylinder (6) and permitting to adjust the distance at rest between the shoulders (8a, 9a) of both spacers.

6. Rear axle according to one of the preceding claims, characterized in that the aforesaid brace forming member (7) comprises a spacer (7a) concentrically fast therewith, disposed inside of the elastic element (10) and having a length smaller than the distance between both shoulders (8a, 9a) of both spacers to limit the squeezing of the elastic element (10).

7. Rear axle according to claim 1, characterized in that the aforesaid mechanical device (5) is incorporated into each one of both front elastic connections (C).

8. Automotive vehicle fitted with an axle according to one of the claims 1 to 7.

## Patentansprüche

1. Hinterachse für Kraftfahrzeug, derjenigen Gattung mit zwei Radträger zum Beispiel mit gezogenen Armen oder mit gezogenen Schwingdreiecken, einem Rahmen, an welchem die Radträger um eine Schwenkachse herum angelenkt sind und auf welchem der Fahrzeugkasten über zwei hinter der Radachse liegende elastische Verbindungen mit hoher Seitensteifigkeit und zwei vor der Schwenkachse der Radträger liegende elastische Verbindungen mit hoher Seitennachgiebigkeit ruht, dadurch gekennzeichnet, daß sie eine zwischen dem Rahmen (1, 3) und dem Kasten (4) des Fahrzeugs verbundene mechanische Vorrichtung (5) aufweist, mit einem die Verschwenkung des Rahmens in bezug auf den Kasten (4) des Fahrzeugs um einen hinter der Achse der Räder liegenden Gelenkpunkt (01) gestattet, wenn eine an einem der Räder angreifende Seitenkraft einen durch das elastische Element (10) festgesetzten vorbestimmten Schwellenwert überschreitet.

2. Hinterachse nach Anspruch 1, dadurch gekennzeichnet, daß die vorgenannte mechanische Vorrichtung (5) einen mit dem vorgenannten Rahmen fest verbundenen Zylinder, ein eine Spannstange bildendes, den Zylinder (6) koaxial durchquerendes und durch seine freien Enden mit dem Fahrzeugkasten (4) verbundenes Glied (7), zwei Abstandshalter (8, 9), die in dem Zylinder (6) durch das vorzugsweise durch eine zwischen den beiden Abstandshalter (8, 9) zwischengefügte vorgespannte Feder gebildete vorgenannte elastische Element (10) axial voneinander getrennt gehalten werden, umfaßt, wobei der eine oder der andere dieser Abstandshalter gegenüber des eine Spannstange bildenden Gliedes (7) und entgegen der Rückholkraft des elastischen Elements (10) jeweils in der einen Richtung oder in der anderen Richtung axial verschiebbar ist, wenn die vorgenannte Seitenkraft den vorgenannten Schwellenwert überschreitet.

3. Hinterachse nach Anspruch 1 oder 2, dadurch gekennzeichnet, daß der vorgenannte Zylinder (6) zwei beiderseits desselben liegende innere Flanschen (6a, 13) aufweist, auf welche sich zwangsläufig durch die Wirkung des vorgenannten elastischen Elements (10) zwei Schultern (8a, 9a) der beiden vorgenannten Abstandshaltern (8, 9) abstützen, welche sich außerhalb jedes der Enden des Zylinders (6) verlängern, um sich an jedem ihrer beiden freien Enden an einem mit dem eine Spannstange bildenden Glied (7) fest verbundenen Anschlag (12, 14) abzustützen.

4. Hinterachse nach einem der vorangehenden Ansprüche, deren Rahmen aus einer Querstrebe (1) und aus zwei Längsstreben (3) besteht, wobei die Radträger (2) an der Querstrebe (1) angelenkt sind, dadurch gekennzeichnet, daß das eine Spannstange bildende Glied (7) parallel zu der Querstrebe (1) ist und daß der vorgenannte Zylinder (6) mit der Querstrebe (1) fest verbunden ist.

5. Hinterachse nach einem der vorangehenden Ansprüche, dadurch gekennzeichnet, daß einer (13) der vorgenannten inneren Flanschen des Zylinders (6) durch eine gegenüber dem Zylinder (6) einstellbare und das Einstellen der Entfernung in der Ruhelage zwischen den beiden Schultern (8a, 9a) der beiden Abstandshalter gestattende innere Mutter (13) gebildet wird.

6. Hinterachse nach einem der vorangehenden Ansprüche, dadurch gekennezichnet, daß das vorgenannte eine Spannstange bildende Glied (7) einen mit diesem konzentrisch fest verbundenen, innerhalb des elastischen Elements (10) angeordneten Abstandshalter (7a) aufweist, der eine kleinere Länge als der Abstand zwischen den beiden Schultern (8a, 9a) der beiden Abstandshaltern hat, um das Zusammendrücken des elastischen Elements (10) zu begrenzen.

7. Hinterachse nach Anspruch 1, dadurch gekennzeichnet, daß die vorgenannte mechanische Vorrichtung (5) in jede der beiden vorderen elastischen Verbindungen (C) eingebaut ist.

8. Mit einer Achse nach einem der Ansprüche 1 bis 7 ausgerüstetes Kraftfahrzeug.